# EUROPEAN PATENT APPLICATION

(11) **EP 1 591 212 A1**
(43) Date of publication of application: **02.11.2005**
(21) Application number: 03776940.3
(22) Date of filing: 04.12.2003
(51) Int. Cl.: B27G 19/02

(54) **PROTECTOR FOR THE CUTTING WHEEL OF A SAWING MACHINE**

(30) Priority: 04.12.2002 ES 200202785
(71) Applicant: Bello Garcia, Benjamin, 33204 Gijon (Asturias) (ES)
(72) Inventor: Bello Garcia, Benjamin, 33204 Gijon (Asturias) (ES)
(74) Representative: Carpintero Lopez, Francisco
(86) International application number: PCT/ES2003/000620
(87) International publication number: WO 2004/050315

(57) **Abstract**

The protective device incorporates a transparent plate (1) with compartments (2), (6) and (9) which are adapted to the shape and thickness of the part to be cut (3), preventing the discharge of the particles to the outside and also preventing accidents involving cuts to the operators handling the parts to be cut. It also incorporates means for the injection with air at an adjustable piressure to prevent the accumulation oif particles on the transparent surface, and means of suction and discharge of same to the outside. The plate (1) may be suspended on the work table, at an intermediate height and fully raised so that it can be adapted to the different thicknesses of the parts to be cut, wherein the fully raised position can be released by means of the lever (28') and the lowering from the position of intermediate elevation retarded by means of a decelerator (14) and released by means of the lever (13). The protective device as a whole is mounted on a bridge formed by four horizontal arms and one vertical arm, wherein the upper horizontal arms supporting the protective device, besides being telescopic, rotate 360° on both sides in order to place the protective device outside the vertical plane of the work table, whilst the vertical arm (26) can be lowered by means of the telescopic arms (27) (27') in order to cancel the entire movement.

## Description

### OBJECT OF THE INVENTION

This invention relates to a protective device for the cutting disc of sawing machines whose obvious purpose is to cover the corresponding cutting disc of a sawing machine whilst it is in use, thereby preventing the operator from cutting his hands, whilst at the same time preventing the sawdust and powder produced during the cutting operation from being discharged.

The object of the invention provides the sawing machine manufacturing machine sector, and hence the users of such machines, with a protective device that can be used conveniently and effectively by the professionals who handle the machine tools of the type referred to.

### BACKGROUND TO THE INVENTION

The machine tools which use cutting discs for cutting wooden and similar parts into sections are provided with a protective device which covers the disc to prevent the operator from cutting his hands whilst handling the parts to be cut on the cutting table, as well as to prevent shavings, sawdust and powder from being thrown outside the machine and hence onto the face of the person handling it.

There are different types of protective devices of varying degrees of sophistication and efficiency, and we may quote as examples types that cover the upper section of the cutting disc in an attempt to perform the functions referred to, but because of their arrangement they present serious problems both in terms of efficiency in their operation and of convenience to the operators, leading to a situation, in many cases, where the protective device has to be removed and the parts are handled more conveniently, but without any type of protection, with all the risks that such a procedure entails.

In other cases protective devices are known in the form of a plated mounted on a suitable support, in the manner of a bridge which can be adjusted in order to adapt to different situations, although these protective devices require to be changed when a vertical or inclined saw is sued. Moreover, in most of the protective devices of prior art it is necessary to remove the support in order to work with parts or panels exceeding in dimensions the limits of the arc.

Other disadvantages of the more advanced conventional protective devices is that two plates or compartments are provided, one wider than the other, to enable the disc to be used in the inclined or vertical position respectively, one or other plate having to be fitted or removed in each case.

Furthermore, some protective devices of prior art, do not enable some of the inside to be seen, sometimes leaving the cutting disc hidden from the view of the operator, with the consequent problems and disadvantages, not only from the safety aspect but because it prevents the operator from seeing where exactly the part is being cut. Moreover, the configuration characteristics of the protective devices of prior art enable a large quantity of sawdust and powder from being projected to the outside.

### DESCRIPTION OF THE INVENTION

The protective device constituting the object of the invention has been designed to solve the problems outlined above since it is reliable and convenient to use and fit on the cutting tool, does not leave the cutting disc within range of the operator's hand, particularly in operations as expensive as those which sometimes involve positioning the part to be cut, whilst at the same time the projection to the outside of particles resulting from cutting the material and of powder, this element being so harmful to health.

Finally, this is a protective device with optimum performance characteristics which the professional will use actually and voluntarily, which is not the case with the conventional protective devices, which are in many cases removed from the machine since they are an obstruction rather than a protection.

Since the protective device is based on a composition comprising a plate, and consists of a material that is resistant and transparent throughout, allowing the location of the cutting disc to be determined at all times, it exhibits a number of novel peculiarities or characteristics from which notable, important advantages are derived, as will be explained below.

One of the novel characteristics of the protective device according to the invention is that it is provided with a set of multiple compartments based on plates which are oscillating and capable of adapting at all times to any type of pat to be cut, and whose compartments provide and first effective protection against the dust and projections of the material, as well as a reduction in the noise produced by the disc. Said compartments are supplemented by pressers which are designed to push the multiple plates against the part to be cut to provide an adaptation on it, even though they are mouldings.

It also includes lateral compartments which interact to protect against the dust and projections of the material produced during cutting, and also reduce the noise generated by the disc, although the fundamental characteristic of these lateral compartments is that of protecting the operator from hand injuries due to accidental contact with the disc, wherein these compartments are connected by means which enable same to be locked at a height above the work table, which is achieved by means a single upward push and a block, or by means of a lever. The means for raising the lateral compartments are based on tilting connecting rods which enable them to be raised separately or simultaneously to allow the entry of parts of different thicknesses to be cut.

There is a third type of compartment. These compartments are of metal, small in size and are designed to close the cavity that exists between the multiple compartments and lateral compartments, thus preventing dust from being discharged to the outside.

This assembly, formed by three types of compartments, enables the protective device not only to perform its function efficiently but to be used as a very convenient tool since it does not require any height adjustment whenever the thickness of the part to be cut is changed, because the compartments will be raised and suspended automatically as the part passes through.

It is also important to emphasise that whatever the protective device is used for it is provided with an automatic tilting device to prevent possible accidents if the part to be cut catches on the protective device.

Another novel characteristic of the protective device according to the invention is the incorporation of driving or propelling means inside the plate to move the particles originating from the cutting operation, as well as the extraction of same by suction, for which an optional and adjustable compressed air driving system is enclosed within the plate, preventing the dust from accumulating on its walls, in which case visibility would be lost. In addition to the compressed air system for mobilising the particles inside the plate, suction pipes are included for extracting the particles and dust to the outside.

An important characteristic of this plate is that both when it is at rest and when the conventional parts are passing through it is supported on the cutting table, the compartments being adapted to the passage of same.

Another novel characteristic exhibited by the protective device according to the invention consists in the possibility of raising same to a certain height or intermediate height; this position is achieved manually and is locked automatically, thereby enabling voluminous parts to pass through and even other applications to be implemented. In order to lower the device to the starting position or position of rest on the work table, a system is provided which damps said lowering and is activated automatically whenever we reach said intermediate position of elevation and is deactivated by the light touch of a lever, which returns it to its starting position.

Moreover, means are included which enable the protective device to be fully raised, which can be achieved without the need to dismantling ay element, by simply pulling the plate upwards to reach the above-mentioned position very easily, assisted by a double damper unit which raises the device until it is left at a maximum operating height in which it is automatically locked. It can be lowered by pulling the same whilst at the same time actuating a lever to release a safety system.

Another characteristic of this invention is the height position, which is manually adjustable and fixed by means of a knob, this system also being provided with automatic safety tilting.

Another novel characteristic exhibited by the protective device according to the invention is that it can be released from the support in the form of a bridge, formed by a lower horizontal double arm, a vertical arm and an upper horizontal double arm on which is suspended the protective device, by means of a folding lever located on the upper horizontal arm, or in the connection between said arm and the vertical arm, said horizontal arm rotating to one side or the other, with a radius of rotation of 360°, which enables the protective device to be placed in the moist suitable position, thereby providing a free vertical space.

Another characteristic is that the horizontal supporting arm of the protective device can be adjusted telescopically, as can the lower horizontal arm, whilst the vertical arm is able to rotate from the vertical to the horizontal position and is therefore able to lower the entire system of the protective device, enabling parts of any dimension and shape to be positioned.

On the other hand the protective device includes means which enable the telescopic arms to be extended as necessary, based on the fact that the lower horizontal arms include a measuring display, graduated scale and safety stop, whilst the upper horizontal arms are provided with a laser tip and a tilting counterweight for balancing the pulling action made by the plate when said arm is extended, so that the laser tip serves as a guide to finding the exact position of the plate at the time the horizontal telescopic arms are extended, or the arc constituting the support of the plate, which is the same thing, since it must be centred with the cutting line. The measuring display and graduated scale in the lower horizontal arms therefore enable the arc to be extended to the exact degree, and the laser tip, on the upper horizontal arm, will hen indicate the exact position of the plate on the cutting line.

The laser tip, besides acting as the means of guidance in terms of the extendibility of the arc, indicates the point of cutting the part or material, since it is adjustable in all directions.

It is also provided with means which enable the plate to be adjusted longitudinally and removed quickly, enabling both operations to be carried out by means of a pair of regulating and fixing knobs so that the exact position of the plate can be adapted to the cutting disc, providing the possibility of removing it from its support if necessary, the latter being provided with a safety stop if the operator forgets to tighten the adjusting and fixing knobs and to prevent the plate from falling after the entire lifting system is switched on.

Also novel are the means of lateral adjustment of the plate, which enable it to be used with discs that are in both the vertical and inclined opposition, since the exact desired position of same is achieved by lighting moving the lever to the left or right, thereby avoiding the troublesome replacement of plates.

Based on the novel characteristics referred to a protective device is provided in which it is not necessary to replace the plate for work with a saw in the vertical or inclined position, since a simple movement of the lever is sufficient to move the plate laterally to one side or the other, enabling it to be used in one or other case.

In order to work with large panels it is not necessary to remove the support arc since it can be extended.

It is also possible, in cases where this is considered convenient or necessary, to lower the arc and leave the work table free.

Another advantage exhibited by the protective device according to the invention is that it has different positions, one fully lowered, resting on the work table, another lockable at an intermediate height, and another fully raised, using in all cases simple means for effecting the corresponding locking, release and actuation. The device is also provided with a supplementary height adjustment system.

Another characteristic of this invention is that the device is provided with a knob or handle for adjusting the support of the compartments on the work table to achieve optimum resistance to the discharge of dust.

### DESCRIPTION OF THE DRAWINGS

To supplement the description given, and to assist in a clearer understanding of the characteristics of the invention, according to a preferred practical embodiment of same, a set of drawings is attached as an integral part of said description, showing the following by way of non-limiting illustration:
Figure 1. - Shows a perspective view of the plate of the protective device constituting the object of the invention, including a part to be sawn and the different positions of the compartments according to the part shown.
Figure 2. - Shows a view along a lateral elevation of the plate according to the invention, in its position of rest, including the compressed air system.
Figure 3. - Shows a view along a lateral elevation of the plate according to the invention, and also shows a part to be sawn and the different positions occupied by the compartments according to the dimensions of the part.

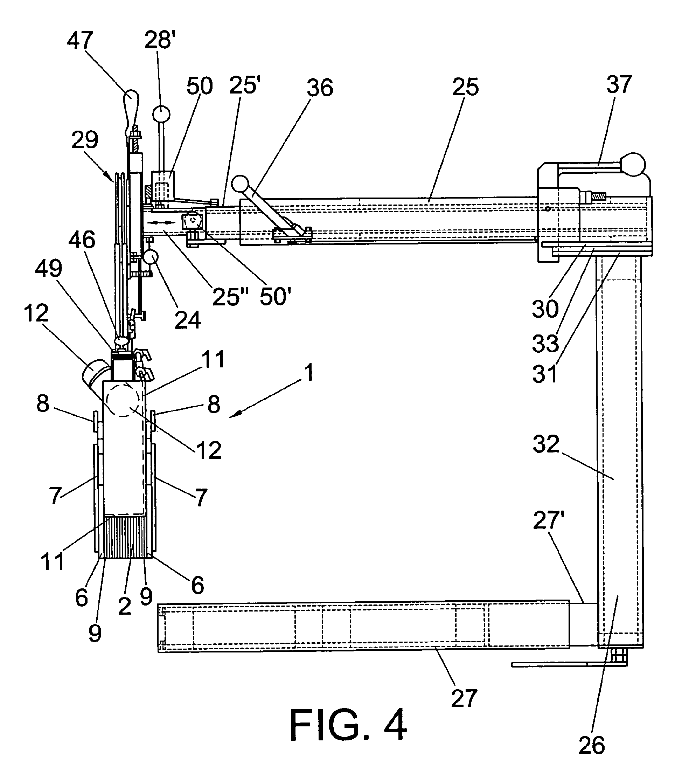

Figure 4. - Shows a front view of the protective device shown in the previous figure, revealing the support in the form of a bridge, with four horizontal arms, two upper and two lower arms, and one vertical arm forming an assembly with them.
Figure 5. - Shows a detail of the method of achieving the corresponding damping the downward movement of the plate of the protective device after release of the intermediate raised position.
Figure 6. - Shows a detail of the method of assembling and locking the upper horizontal arms relative to the vertical arm to achieve a rotation of 360° to one side or the other of said upper horizontal arms.
Figure 7. - Shows a view according to a front perspective of the assembly shown in Figure 1, but with the means used to establish the point of extendibility of the support bridge of the protective device in order to position it correctly in relation to the cutting disc.
Figure 8. - Shows a diagrammatic detail of the method of lowering the vertical arm to release the entire assembly of the protective device and the bridge of which said vertical arm forms part relative to the work table.
Figure 9. -0 Shows a detail, in section, of the means which determine the lowering of the vertical arm described in Figure 8, by means of the lower horizontal arms, and a cylindrical axis inside them.
Figure 10. - Shows a general detail of the mechanism described in Figure 9, of which the lower horizontal arms consist, and which determines the locking/release of the vertical arm both in its vertical and lowered position.
Figure 11. - Shows in plan view and elevation the device which provides the lateral movement of the plate.

### PREFERRED EMBODIMENT OF THE INVENTION

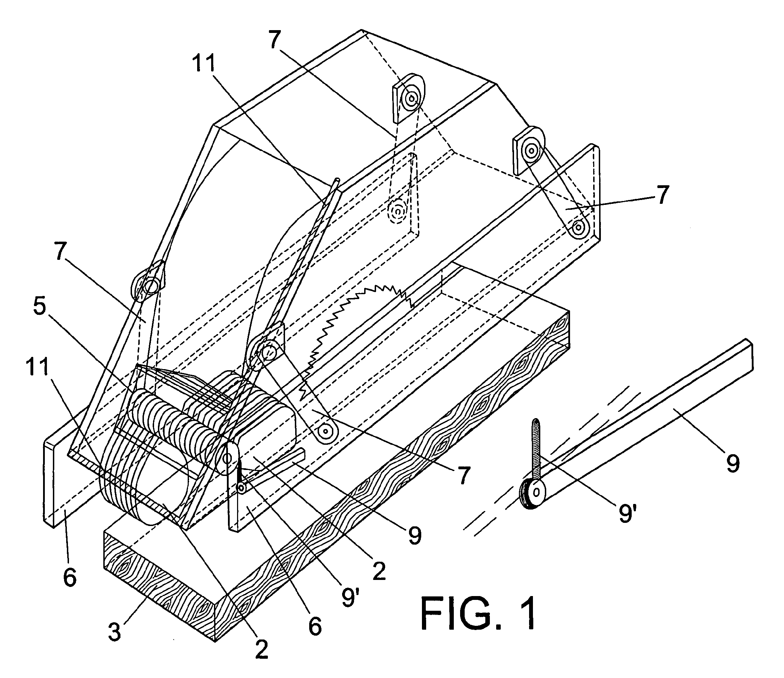

An examination of the figures listed indicates how the protective device of the invention comprises a plate (1), consisting of a resistant and fully transparent material, provided with multiple compartments based on sheets (2), mounted so that they oscillate and are adapted to the part to be cut (3), which is arranged and is made to pass through the surface or corresponding work or cutting table, Figure 1 showing the corresponding cutting disc (4) on that work table and the panel or part to be cut (3). The sheets constituting the multiple compartments (2) are adapted by means of the thrust exerted by pressers (5), which keep those multiple compartments (2) in the appropriate position on the part to be cut (3) at all times, whatever the shape and cross-section of the latter.

In addition to those multiple compartments (2), it incorporates lateral compartments (6) which interact with the other compartments to protect against the dust and prevent the both dust and the particles resulting from the cutting from being discharged outside. The noise generated by the cutting disc (4) is also reduced.

The main function of said lateral compartments (6) is to protect the operator's hands, which may accidentally come into contact with the disc (4).

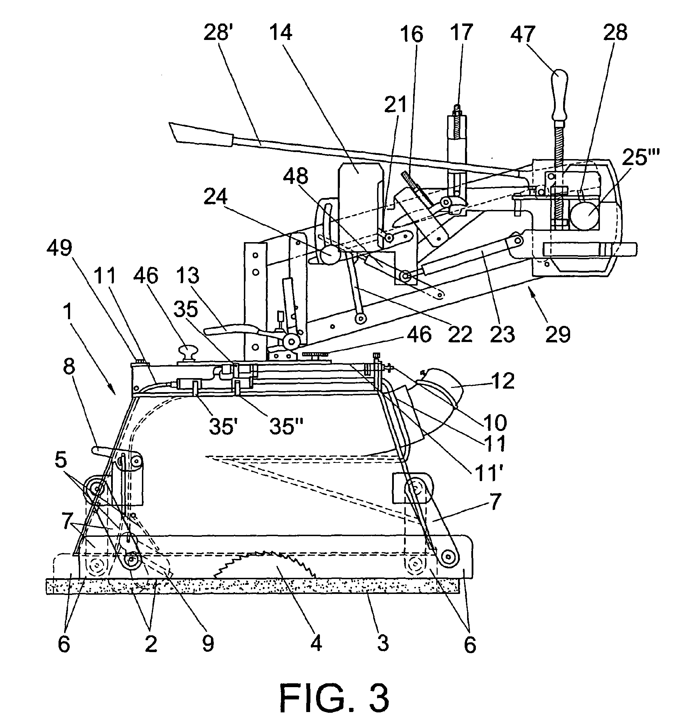

When the part (3) to be cut these compartments (6) tilt upwardds, as shown in Figure 3. It is possible to effect this upward displacement or tilting simultaneously in both compartments (6) or separately, since in both cases they are related to corresponding connecting rods (7) so that the compartments (6) can be locked in their raised position at a height of approximately 6 cm from the work table and released by means of a manually actuated lever (8).

The device also incorporates a third group of metal compartments (9) consisting of small parts which seal the cavity that exists between the multiple compartments (2) and the lateral compartments (6) to prevent dust passing to the outside.

These closing compartments (9) consist of metal plates secured to the inner edge of each of the lateral walls of the plate (1), in the inlet area of the parts, these compartments (9) being connected to the plate by means of a threaded rod (9'), but with the possibility of tilting relative to said plate (1) as the parts pass through.

This assembly of the three types of compartments (2), (6) and (9), in addition to providing a very effective means of protection, converts the protective device to a tool that is very convenient to use since it does not necessitate adjusting the height of said protective device whenever the thickness of the part to be cut is changed, because adaptation to all thicknesses and shapes of parts, between 0 and 6 cm approximately, is automatic.

In addition to automatic operation, the device may operate manually or in mixed mode, being fixed by means of the knob (24) at a certain height as if it were a conventional protective device, but with the compartments which enable the material to pass through easily, even though it has an irregular dimension or is greater in height than that at which the protective device is fixed.

Also incorporated are internal, transparent parts which help to discharge the dust and protect against possible, albeit rare, breakage of a tooth on the disc (4).

On the outside of the plate (1) a quick-change plug (10) has been provided which can be connected to any pneumatic system so that air can be introduced, at the discretion of the operator, at a pressure that is adjustable on the inside, and to move the dust so that it does not accumulate on the walls and enables the exact position of the part to be cut (3) to be seen relative to the disc (4). Logically the quick-change plug (10) will be connected to the pneumatic system which exists in all workshops, which means that no additional compressed air system is required. The plug is provided with a set of three air bypass valves (35), (35') and (35''), (35) being the inlet valve, with its pipe (11'), and the other two being outlet valves, opening into several pipes (11) which feed the air to the inside of the plate for discharge of the particles and dust to the outside.

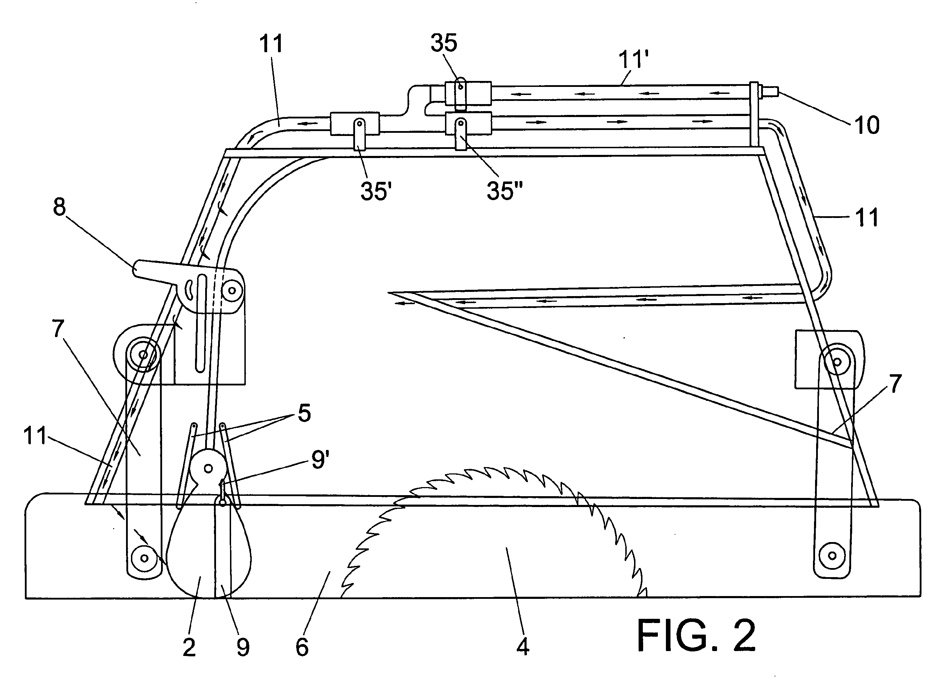

One of the pipes (11) injects air to the inside of the plate (1), whilst the other pipe (11) extends so that it abuts the inside of the front wall of the plate (1), being provided with a series of small openings which inject the compressed air into the front section of the compartments (2), creating an air flow which prevents the discharge of dust and particles that may exist in that front area of the plate (1), as clearly shown in Figure 2.

A pipe (12) is provided for rapid connection to an external installation for the discharge of dust and particles resulting from cutting.

The protective device may be fixed automatically at a height of approximately 11 cm, which enables voluminous parts to pass through or enables it to be used in other applications so that in order to release that intermediate raised position it will be sufficient to actuate a lever (13), enabling the protective device to return to its original position, or the late (1) to be lowered, which is the same thing, the lowering being damped by a decelerator (14) which comes into operation automatically.

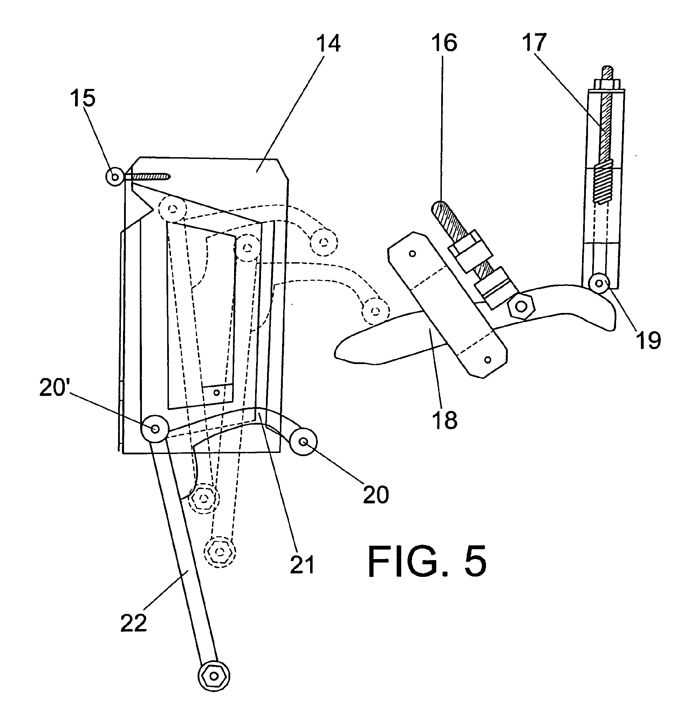

Figure 5 shows the decelerator assembly (14) where a releasing element (15) has been provided, wherein a pair of regulators (16) and (17) form part of the decelerator assembly (14), the first of these regulators adjusting the height or intersection of a "catapult" (18), which is partially actuated by the roller (19) belonging to the regulator (17), this roller (19) exerting pressure on the rear section of the "catapult" (18), whilst the regulator (16) fixes a position over an approximately intermediate length, so that its front section actuates a roller (20) belonging to an arm (21) which is raised and lowered with the plate, and whose arm (21), shown in that figure 5 in three different positions, is articulated to a connecting rod (22) carrying a roller (20'). This means that the first regulator (16) referred to adjusts the height of intersection of the head of the "catapult" (18) with the roller (20), whilst the regulator (17) regulates the pressure of the pressure roller (19) on the tail of the catapult (18). A pneumatic cylinder (48) is connected to said mechanism, as shown in Figure 3. The decelerator (14) referred to is released by the actuation of a lever (13).

The protective device may be located in a fully raised position in cases where it is necessary to pass through parts of dimensions larger than those permitted by the intermediate elevation, all this without the need to remove any element, it being sufficient to pull the plate upwards very easily, assisted by a double set of dampers (23) which are designed to raise it so that it can be left at a height at which it is will remain level with the upper horizontal arms (25) (25'), corresponding to the support bridge, of which the vertical arm) (26) and the lower horizontal arms (27) (27') also form part.

At the end of travel at this full elevation of the plate, a brake will come into operation which is automatically locked by means of a pin (28), the position obtained by means of the dampers (23) being maintained, the purpose of the brake (28) being to provide added safety.

To return the plate to its original position it is pulled downwards whilst at the same time said lever (28') is pushed from the brake (28), operations are carried out easily from the working position, just as the remaining operations.

The height of the plate is manually adjustable by means of the knob (24).

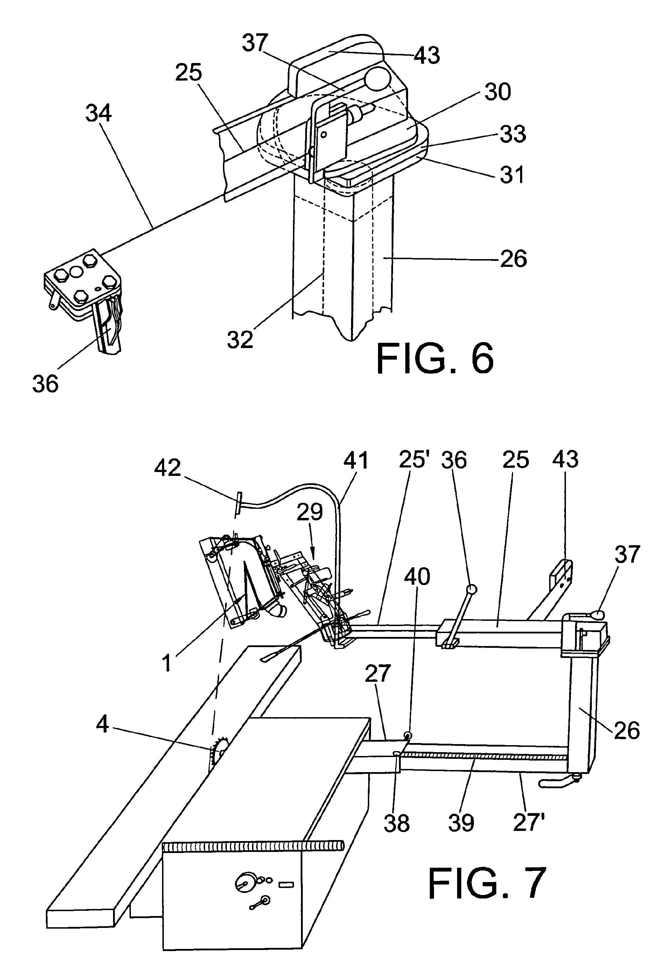

If the height obtained by fully raising the late is not sufficient, the other option is to release the upper horizontal arm (25) both from the folding lever (36) and (37), an option which provides the possibility of rotating the upper horizontal arms (25) (25') 360° to one side or the other, enabling them to be parked in the most suitable position, thereby ensuring that the space above is left completely free. Figure 6 shows the detail of the connection and locking of the upper horizontal arm (25) to the vertical arm (26), a connection which is made by means of two metal bars (30) and (31), the first of them integral with the vertical arm (26), with the peculiar characteristic that the bar (30) of the upper horizontal arm (25) is at the same time integral with an inner rotating pipe (32) mounted on anti-friction parts inside the vertical pipe (26), so that when said inner pipe (32) rotates the upper horizontal arms (25) and (25') are also able to rotate. An anti-friction joint (33) has been provided between the bars (30) and (31).

Figure 6 shows the characteristics referred to, as well as a cable (34) which runs along the outside of the upper horizontal arm (25) and which connects a folding lever (36) provided in said arm to another lever (37) provided in the connecting section between both arms (25) and 26), by means of which levers it is possible to effect the release and 360° rotation of the upper horizontal arms (25) and (25') relative to the vertical arm (26), and separate the protective device from the vertical, i.e. the plate (1).

If it is necessary to allow through parts to be cut which have special dimensions that exceed the dimension of the bridge or arc formed by the horizontal arms ((25) (25') and (27) (27') together with the vertical arm (26), said bridge may be extended, or the horizontal arms (25) (25') and (27) (27') may be extended, which is the same thing, since they are telescopic, an operation which is easily carried out since the protective device is provided, in the lower horizontal arm, with a measurement display system and safety stop. Figure 7 shows that lower horizontal arm (27), which exhibits a display (38) and a fixing knob (40), and in the lower horizontal arm (27') a graduated scale (39), whilst in the upper horizontal arm (25') is fitted a tie rod (41) at whose end it carries a laser tip (42). Moreover the upper horizontal arm (25) is provided with a tilting, rotating counterweight (43) to balance the pull effected by the plate (1) when the extendible arm (25') is extended. This pull may also be balanced by another option, which is to raise the plate (1) fully to an approximately vertical position, exceeding the so-called total elevation.

The laser tip (42) serves a guide for finding the exact position of the plate (1) at the time the point or arc is extended, since the latter must be centred with the cutting line. The display (38) therefore supplies the exact degree to which the bridge is required to be extended, the laser tip (42) indicating the position of the plate on the cutting line.

To return to the initial position it is sufficient to fold the telescopic or extendible arms (25) (25') and (27) (27'), which will stop at predetermined points.

The laser tip (42) mounted on element (41), in addition to performing the function of guiding and indicating the point at which the cutting is to be carried out, exhibits the characteristic of being adjustable in all directions. The graduated scale (39) is provided to extend the lower horizontal arms (27 (27'), and subsequently to extend the upper horizontal arms (25) (25') until the laser tip (42) marks the location of the cutting disc, thereby enabling the exact position of the plate (1) to be obtained, regardless of its lateral adjustment.

If the part to be cut still has the dimensions which do not enable the operation to be carried out, even allowing for the extendibility of the bridge, the bridge assembly may then be lowered, causing the vertical arm (26) to be lowered without having to remove any element.

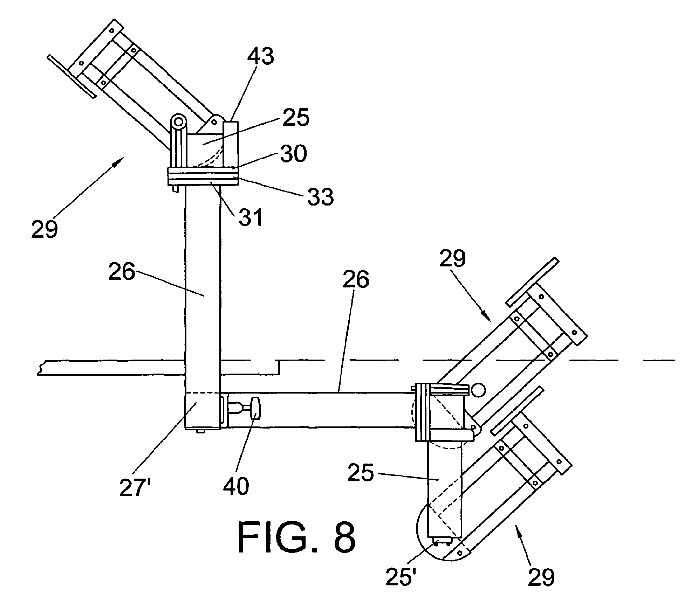

Figure 8 shows the method of lowering the vertical arm (26) relative to the lower horizontal arms (27) (27'), that figure 8 showing three positions, one vertical, another lowered and the third the position of rotation of the upper horizontal arms (25) (25') after the vertical arm (26) is lowered, the lower horizontal arm (27) being provided with locking knob (4) so that the actuation of that knob (40) effects the release between both arms (27) and (27').

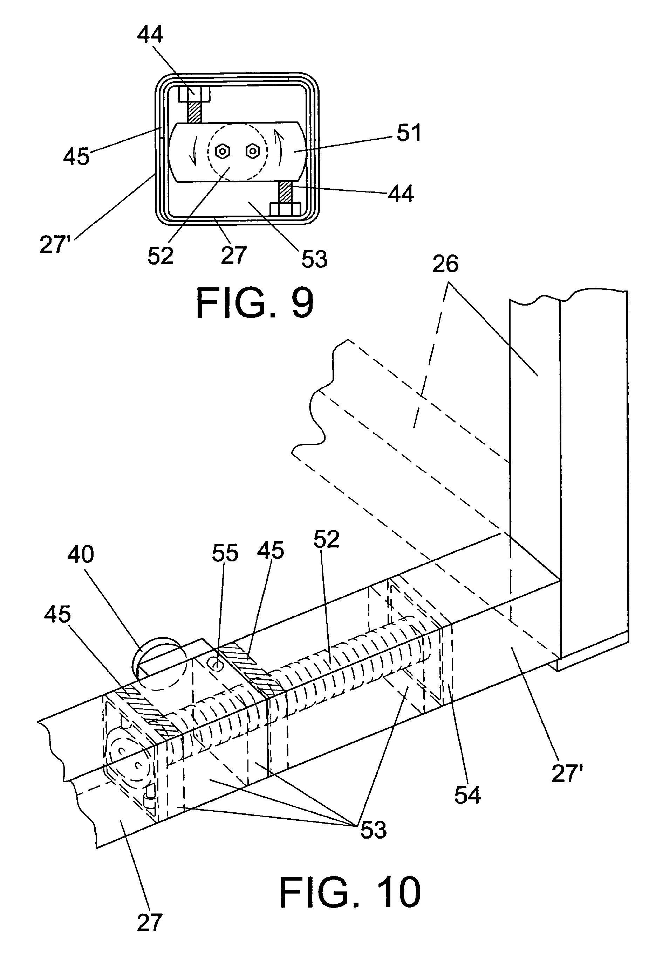

Figure 9 shows, in section, the horizontal arms (27) and (27'), and the extension stop angle (45), which abuts said arm (27'), and runs, together with it, along the inside of the arm (27). The figure also shows the anti-rotation safety stops (44) on which rest the ends of the fixing stop part (51), which is screwed to the head of the inner cylinder (52), as well as the bushings (53) on which said inner cylinder (52) rotates.

Figure 10 shows, in perspective, a general view of the system for lowering the vertical arm (26), which comprises, in addition to the elements described in Figure 9, other elements such as: on the one hand the bar (54) integral with the inner cylinder (52), causing the latter, together with the fixing stop part (51), to rotate on the bushings (53), and on the other hand, a different plane is shown of the extension stop angles (45) which limit the extension between the lower horizontal arms (27) and (27') on making contact with the unlockable stop part (55). The knob (40) fixes the selected position of the arc extension.

The plate (1) can also be adjusted longitudinally, and can even be removed, by actuating the adjusting and fixing knob (46), enabling an adjustment to be made to adapt the exact position of the plate (1) relative to the cutting disc (4) so that said plate (1) incorporates a safety stop (4). If the operator forgets to tighten the plate after an adjustment, this prevents it from loosening after the total elevation system is put into operation.

The plate also incorporates means of lateral adjustment that can be actuated by means of a lever (50) which can be used to obtain an exact desired position of the plate (1) and enabling it to be used with the disc both in the vertical and inclined position.

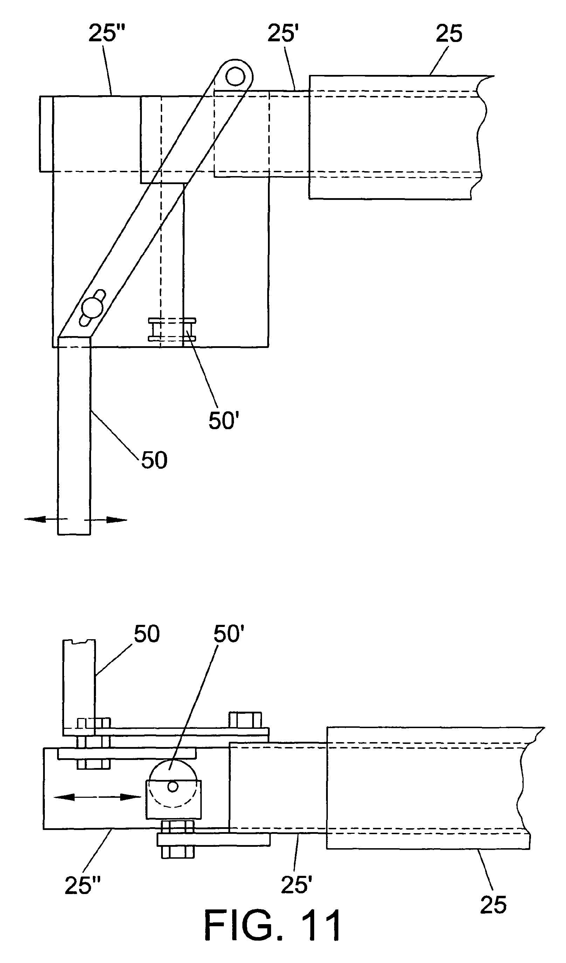

The lateral adjustment system consists of an arm (25'') that can be extended or retracted relative to the latter, with the aid of a roller (50') which supports and rotates against a lateral plate of the arm (25''), which arm is connected to the body (29) ( supporting the plate, with the aid of a connecting or tie rod which connects the arm (25') to the lateral plate of the arm (25''). The actuating lever (50) is connected to said connecting rod so that when it is actuated in one or other direction the arm (25'') is retracted or extended, giving rise to the lateral movement of the body (29) and the plate (1). Figure 11 shows perfectly clearly the elements constituting said lateral adjustment device.

Finally it is stated that the protective device assembly also incorporates a horizontal support adjustment for the compartments which will be used in specific cases and which, once fixed, is retained at a specific point, it being possible to effect this adjustment by means of an adjusting handle (47) which is caused to rotate slightly to the left or right, which in turn causes the plate (10) to close and provides a perfect support for the compartments of the device on the work table, thereby ensuring optimum resistance to the discharge of dust.

## Claims

1. Protective device for the cutting disc of sawing machines, which is designed to prevent the hands of the operators from being cut whilst handling the parts to be cut, as well as to prevent the projection to the outside of particles and dust resulting from the cutting operations, comprising a hollow, transparent bell or plate (1), supported by a displaceable structure which enables the plate to be moved up to the position of the cutting disc, **characterised in that** the plate is provided with a number of compartments which act by closing the plate at the bottom on the part to be cut or work table, and specifically:
- Multiple compartments (2), consisting of oscillating plates, arranged to seal the front section and/or rear section of the plate in the direction of passage of the material to be cut.
- Lateral compartments (6) which are arranged to seal, in their lower section, the sides of the plate.
- Sealing compartments (9), arranged between the multiple compartments (2) and the lateral compartments (6),
the plate incorporating a pipe (12) for connection to an external dust and particle discharge installation, provision being made for the displaceable structure on which the plate is mounted to consist of a number of moving arms which allow multiple movements of the plate by means of actuating levers.

2. Protective device for the cutting disc of sawing machines, according to Claim 1, **characterised in that** the oscillating plates forming the multiple compartments (2) are connected to the plate (1) by means of a common shaft about which they are able to rotate freely, tilting to a greater or lesser degree when the part passes through, in order to adapt to its shape and size, each of the plates comprising the compartment being able to tilt independently, provision having been made to incorporate pressers (5) which exert pressure on the plates when they are being tilted in order to ensure contact on the surface of the part to be cut.

3. Protective device for the cutting disc of sawing machines, according to Claim 1, **characterised in that** the lateral compartments (6) comprise various plates arranged to seal the plate (1) longitudinally in its lower section, in the direction transverse to the movement of the parts, and being connected to the plate (1) by means of several connecting rods (7) which enable the compartments (6) to be raised simultaneously or separately when the part to be cut is introduced, according to the size of said part.

4. Protective device for the cutting disc of sawing machines, according to Claims 1 and 3, **characterised in that** the lateral compartments (6) can be locked in a raised position and can be released by means of a lever (8).

5. Protective device for the cutting disc of sawing machines, according to Claim 1, **characterised in that** the sealing compartments (9) comprise metal plates fixed to the lower edge of each of the lateral walls of the plate (1), in the inlet area of the parts to bar the passage of dust between the multiple compartments (2) and the lateral compartments (6), the compartments (9) being fitted with the possibility of tilting relative to the plate (1) as the parts pass through.

6. Protective device for the cutting disc of sawing machines, **characterised in that** the multiple compartments (2), comprising lateral sides (6) and sealing compartments (9), are able to tilt in both directions of passage of the parts.

7. Protective device for the cutting disc of sawing machines, according to Claim 1, **characterised in that** the displaceable structure supporting the plate (1) consists of a bridge formed by upper horizontal arms (25) (25'), one vertical arm (26) and lower horizontal arms (27) (27'), the plate being mounted on the upper horizontal arm (25') by means of a body (29).

8. Protective device for the cutting disc of sawing machines, according to Claim 1, **characterised in that** the body (29) incorporates a series of connecting rods and actuating levers which enable the plate (1) to be displaced in the rising direction and to be locked in a position of intermediate elevation, the plate being released by means of a lever (13), as well as to be fully raised by means of a pair of amperes (23) and supported by a brake which is automatically locked by means of a pin (28) which is released by means of a lever (28'), a wherein a decelerator (14) is provided for damping the lowering of the body (29) and hence the plate (1) from the position of intermediate elevation, after unlocking and release by the lever (13. Provision is also made for means that permit 360° rotation in the horizontal plane of the upper horizontal arms (25) (25') relative to the vertical arm (26) for lowering the latter, and for positioning the plate (1) outside the vertical plane of the work table, wherein the vertical arm (26) is in turn mounted on the horizontal arm (27') by means which enable the latter to be lowered to release the protective device assembly with the bridge relative to the range of action of the work table.

9. Protective device for the cutting disc of sawing machines, according to Claim 1, **characterised in that** the plate (1) incorporates a quick-change plug device (10) that can be connected to a pneumatic supply source for introducing compressed air, which is adjusted from zero to the maximum value by means of valves (35 (35') and (35'') mounted on the outside of the plate (1), in which are connected blow pipes (11) which prevent the particles from adhering to the inner surface of the plate (1).

10. Protective device for the cutting disc of sawing machines, according to Claims 1 and 9, **characterised in that** the blow pipes (11) comprise a branch which injects air into the plate (1), and a second branch which is extended so that it abuts the front wall of the plate (1), being provided with a number of small openings which inject the compressed air into the front section of the compartments (6) thereby creating an air flow which prevents the discharge of dust and particles that may existing **in that** front area of the plate (1).

11. Protective device for the cutting disk of sawing machines, according to claims 1 and 8, **characterised in that** the decelerator (14) which damps the lowering of the plate (1) from the position of intermediate elevation of same, comprises a catapult (18) which actuates the roller (20) of an arm (21) connected to a connecting rod (22), which is displaced in the rising and lowering direction, wherein a regulator (16), which adjusts the height of intersection of the head of the catapult (18) with the roller (20), is connected to that decelerator (14), a second regulator (17) being provided to regulate the pressure of a presser roll (19) on the tail of the catapult (18), the regulator being supplemented with a release element or mechanism (15), wherein the release is performed by means of a lever (13) to unlock the decelerator (14) and therefore effect the retarded lowering of the plate (1).

12. Protective device for the cutting disc of sawing machines, according to Claims 1 and 7, **characterised in that** the upper horizontal arm (25) and vertical arm (26) are connected by various bars (30) and (31), the first of them integral with the horizontal arm (25), the latter being provided with an inner pipe (32) integral with the bar (30), thus allowing the rotation of the latter and hence of the arms (25) (25') relative to the vertical arm (26) for 360° rotation to one side or other of said upper horizontal arms (25) (25'), whose actuation can be achieved by means of a folding release lever (36) articulated to a cable (34) and mounted on the horizontal arm (25) itself, or by means of a release lever (37) located in the area of articulation between the upper horizontal arm (25) and the vertical arm (26), provision having been made for said levers to be used solely for release purposes, because when the arms return to their initial position they are locked automatically.

13. Protective device for the cutting disk of sawing machines, according to Claims 1 and 7, **characterised in that** an element (41) carrying a laser tip (42) that can be adjusted in all directions is mounted on the upper horizontal arm (25'), whilst a graduated scale (39) is mounted in the lower horizontal arm (27') and a display (38) and locking knob (40) are mounted in the lower horizontal arm (27), with the peculiar characteristic that said means enable the plate (1) to be placed in the correct position relative to the cutting disc (4) due to the extendibility of the horizontal arms (25) (25') and (27) (27').

14. Protective device for the cutting disc of sawing machines, according to claims 1 and 7, **characterised in that** it incorporates a system of lateral displacement of the plate (1) which enables it to work with the cutting disc, both in the vertical and inclined positions, comprising an arm (25'') which is connected by one of its ends to the body (28) supporting the plate (1), whilst at the other end it is mounted inside the horizontal arm (25') and can be extended or retracted relative the latter.

15. Protective device for the cutting disc of sawing machines, according to claims 1 and 14, **characterised in that** a cylinder (25''') which enables the plate (1) to be fully raised is arranged inside the arm (25''), the body(29) supporting the plate (1) being mounted on the cylinder (25''').
